# FASCICULE DE BREVET EUROPEEN

(11) **EP 4 348 061 B1**
(45) Date de publication et mention de la délivrance du brevet: **24.09.2025**
(21) Numéro de dépôt: 22732288.0
(22) Date de dépôt: 20.05.2022
(51) Int. Cl.: F15B 1/02, B64C 11/06, B64C 11/36, B64C 11/42, F15B 20/00

(54) **SYSTEME ELECTROHYDRAULIQUE DE CONTRÔLE DE PAS D'UNE HÉLICE DE TURBOMACHINE AVEC POSITION DE MISE EN DRAPEAU**
ELEKTROHYDRAULISCHES SYSTEM ZUR STEUERUNG DER WINKELSTELLUNG DES PROPELLERS EINER TURBOMACHINE MIT SEGELSTELLUNG
ELECTROHYDRAULIC SYSTEM FOR CONTROLLING THE PROPELLER PITCH OF A TURBOMACHINE WITH FEATHERING POSITION

(30) Priorité: 28.05.2021 FR 2105565
(43) Date de publication de la demande: 10.04.2024
(73) Titulaire: SAFRAN AIRCRAFT ENGINES, 75015 Paris (FR)
(72) Inventeur: DE WERGIFOSSE, Huguette, 77550 MOISSY-CRAMAYEL (FR); AURIOL, Jacques, 77550 MOISSY-CRAMAYEL (FR)
(74) Mandataire: Regimbeau
(86) Numéro de dépôt international: PCT/FR2022/050966
(87) Numéro de publication internationale: WO 2022/248796

(56) Documents cités:
- EP-A1- 1 306 558
- US-A1- 2010 071 543
- US-A1- 2020 096 015

## Description

### DOMAINE TECHNIQUE GENERAL

L'invention concerne le domaine des turbomachines comprenant une hélice ou une soufflante à calage variable. Plus précisément, l'invention porte sur un système d'actionnement du pas d'une hélice ou d'une soufflante d'une telle turbomachine.

### ETAT DE L'ART

Différentes architectures de turbomachine ont recours à une hélice (turbopropulseur, open rotor) ou une soufflante (turboréacteur) à calage variable. Cette variabilité permet à la turbomachine de s'adapter aux conditions de vol variables en maintenant un angle d'incidence de l'air favorable sur les pales. La variabilité du calage est particulièrement nécessaire pour les rotors ayant un faible taux de compression, comme les hélices de turbopropulseurs et les soufflantes de turbomachines ayant un taux de dilution (rapport entre le débit du flux secondaire (froid) et le débit du flux primaire (qui traverse le corps primaire)) élevé.

Des mécanismes de changement de pas multiples ont été imaginés pour faire varier le calage des pales d'une hélice ou d'une soufflante. Ces mécanismes comportent généralement une mise en rotation de la pale autour de son axe principal par l'intermédiaire d'une cinématique, par exemple un ensemble bielle - excentrique actionnée par un vérin. Le vérin est alimenté en fluide hydraulique (par exemple de l'huile) en provenance d'un groupe de lubrification de la turbomachine, la variation de la pression de fluide hydraulique délivrée ainsi que la distribution du fluide dans l'une ou l'autre des chambres du vérin permettent de faire varier le pas des pales. Afin de transférer l'alimentation en fluide hydraulique du mécanisme de changement de pas d'un repère fixe (groupe de lubrification) de la turbomachine à un repère tournant (de la soufflante), on utilise généralement un OTB (acronyme anglais de Oil Transfer Bearing, pour joint hydraulique tournant multi-passage ou transfert d'huile tournant). De manière connue en soi, l'OTB comprend une partie fixe par rapport à une partie stator de la turbomachine et qui est connectée, via des canalisations dédiées, à une servovalve et à une pompe, elle-même connectée au circuit de lubrification moteur comprenant le groupe de lubrification et un réservoir d'huile et une pompe, et une partie tournante qui est solidaire en mouvement d'une partie rotor de la turbomachine. Cependant, l'OTB est un dispositif complexe et fragile, susceptible de générer des dysfonctionnements, notamment d'importantes fuites d'huiles affectant la fiabilité et les performances de la turbomachine et nécessitant la mise en place de pompes de récupération et un surdimensionnement du système d'huile moteur. L'alimentation en huile sous pression de ce dispositif est toujours problématique, car en général pour fournir une forte densité de puissance on utilise des pompes hydrauliques entrainées par un des arbres de la turbomachine. Par ailleurs, cette configuration présente des limitations de fonctionnement à bas régime puisqu'elle est dépendante du régime du corps haute pression de la turbomachine et peut être sujet à des problématiques de gavage lors de certaines manœuvres puisqu'elle est dépendante de l'alimentation du circuit d'huile moteur. Par exemple, lorsque la turbomachine est à proximité de l'arrêt (en cours d'arrêt, au cours du démarrage, ou arrêtée) il peut être nécessaire de soit actionner, soit maintenir le calage de pas, ce qui demande en général l'utilisation d'une pompe indépendante supplémentaire (en général alimentée électriquement), et un dispositif de blocage du pas (appelé pitchlock en anglais). Enfin, cette configuration nécessite un système permettant de protéger contre une fermeture du calage des aubes en vol suite à défaillance hydraulique. D'autres alternatives peuvent être envisagés : un système de verrouillage du pas des pales (« pitch lock » en anglais) ou un système de contrepoids pour assurer la mise en drapeau des aubes (ouverture du pas pour limiter la traînée). Ces deux systèmes sont lourds, complexes, chers et peuvent générer d'autres cas de défaillance comme le blocage intempestif du calage.

De plus, la mise en fonctionnement du groupe de lubrification étant généralement lié à la mise en fonctionnement de la turbomachine, il est nécessaire de prévoir des systèmes auxiliaires afin d'assurer certaines fonctions de protection, notamment en cas de survitesse ou d'arrêt moteur. Il est donc nécessaire de prévoir un système de mise en drapeau fonctionnel même en cas d'absence de pression de fluide hydraulique.

D'autre part le mécanisme de changement de pas doit pouvoir, moteur à l'arrêt, assurer la sortie de la position drapeau.

Le document US 2020/096015 décrit un dispositif de régulation d'une machine hydraulique au moyen de pompes à cylindrée constante entraînées avec une vitesse de rotation variable.

### PRESENTATION DE L'INVENTION

Un but de l'invention est de proposer une turbomachine à calage variable qui surmonte les inconvénients de l'art antérieur mentionnés ci-dessous.

Un autre but de l'invention est de proposer un mécanisme de changement de pas indépendant qui s'affranchisse des difficultés liées au transfert de fluide hydraulique d'un repère fixe vers un repère tournant.

Un autre but encore de l'invention est de proposer un mécanisme de changement de pas qui puisse être utilisé quel que soit le fonctionnement de la turbomachine, qui soit en outre capable d'assurer les fonctions de protection et de mise en drapeau des pales de l'hélice/de la soufflante de la turbomachine, de préférence sans être affecté par des pannes possibles du transfert électrique tournant.

Un autre but de l'invention est de proposer un mécanisme de changement de pas qui puisse à la fois être mis en œuvre dans une turbomachine type turbopropulseur ou open rotor comprenant une hélice et un turboréacteur comprenant une soufflante.

A cet effet, l'invention propose, selon un premier aspect, un mécanisme de changement de pas d'une hélice de turbomachine conforme à la revendication 1. Des modes de réalisation sont définis dans les revendications dépendantes.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
La figure 1 est une vue en coupe schématique d'un exemple de turbomachine comprenant une soufflante ou une hélice à calage variable et un mécanisme de changement de pas conforme à un mode de réalisation de l'invention ;
La figure 2 est une vue en coupe partielle et schématique d'un exemple de réalisation d'un réducteur mécanique du type planétaire pouvant être utilisé dans une turbomachine comprenant un mécanisme de changement de pas conforme à un mode de réalisation de l'invention ;
La figure 3 est une vue en coupe schématique d'un exemple de turbomachine comprenant une soufflante ou une hélice à calage variable et un mécanisme de changement de pas utilisant une pompe hydraulique non réversible conforme à un mode de réalisation de l'invention ;
La figure 4 est une vue en coupe schématique d'un exemple de turbomachine comprenant une soufflante ou une hélice à calage variable et un mécanisme de changement de pas utilisant une pompe hydraulique réversible conforme à un mode de réalisation de l'invention ;
La figure 5 est une vue schématique d'un mécanisme de changement de pas d'une hélice utilisant une pompe hydraulique non réversible comprenant un système de mise en drapeau hydraulique selon un premier mode de réalisation ;
La figure 6 est une vue schématique d'un mécanisme de changement de pas d'une hélice utilisant une pompe hydraulique non réversible comprenant un système de mise en drapeau hydraulique selon un deuxième mode de réalisation.
La figure 7 une vue schématique d'un mécanisme de changement de pas d'une hélice utilisant une pompe hydraulique réversible comprenant un système de mise en drapeau hydraulique selon le premier mode de réalisation ;
La figure 8 est une vue schématique d'un mécanisme de changement de pas d'une hélice utilisant une pompe hydraulique réversible comprenant un système de mise en drapeau hydraulique selon le deuxième mode de réalisation.

### DESCRIPTION DETAILLEE

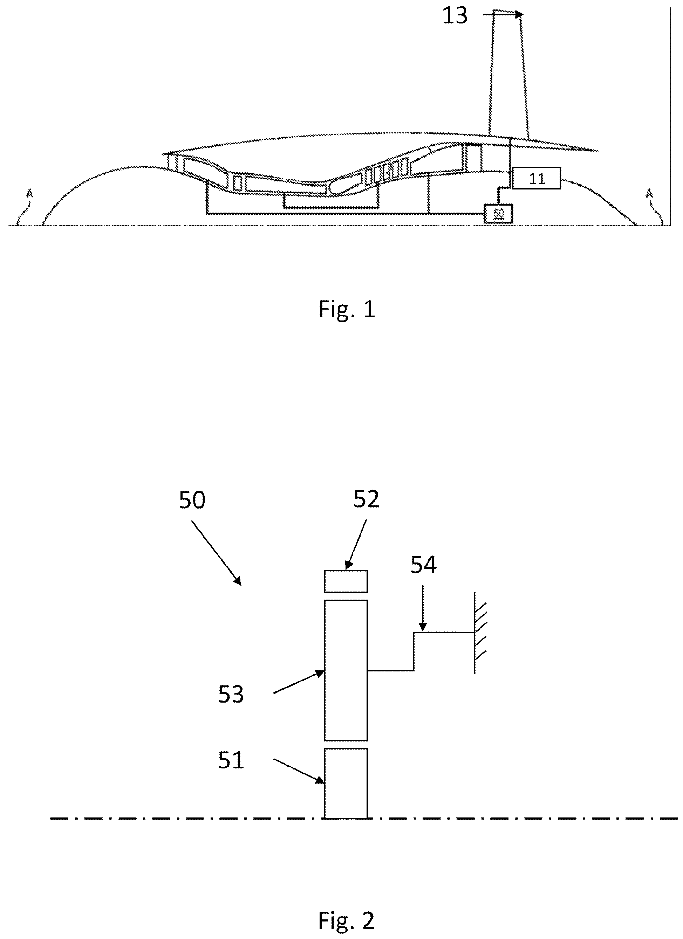

La présente invention s'applique à toute turbomachine à calage variable comprenant un mécanisme de changement de pas. En particulier, l'invention concerne à la fois les turboréacteurs à double flux comprenant une soufflante et les turbomachines à hélice telles que les turbopropulseurs ou encore les open rotor (hélice non carénée) tels que représenté à la **figure 1****,** dont le pas des pales de la soufflante ou de l'hélice est modifiable en fonction des conditions de vol. Dans la suite de la demande, par souci de simplification de la description et des revendications, le terme « hélice » sera utilisé aussi bien pour désigner une hélice comme décrite ci-dessus ou une soufflante d'un turboréacteur.

De manière conventionnelle, la turbomachine comprend, en plus de l'hélice, un réducteur mécanique 50, tel qu'illustré par la **figure 2** configuré pour entrainer en rotation l'hélice. Le réducteur 50 est logé dans un carter de la turbomachine. La turbomachine est configurée pour être montée fixement sur un aéronef par l'intermédiaire de moyens de fixation adaptés, tels qu'un pylône. Dans ce qui suit, on désignera ainsi une partie stator de la turbomachine toute partie montée fixement sur une partie de la turbomachine qui est fixe par rapport au carter qui est configuré pour être raccordé au pylône, et une partie rotor de la turbomachine toute partie qui est mobile autour d'un axe lorsque la turbomachine est en fonctionnement et qui, par définition, est donc montée mobile par rapport à la partie stator. A titre d'exemple, la partie stator comprend le carter de la turbomachine dans lequel sont logés des moyens d'entrainement de l'hélice, etc. La partie rotor comprend par exemple l'hélice ainsi que son arbre d'entrainement.

Enfin, dans la présente demande, l'amont et l'aval sont définis par rapport au sens d'écoulement normal du gaz dans et à travers l'hélice. Par ailleurs, on appelle axe A de la pompe hydraulique, son axe de rotation. La direction axiale correspond à la direction de l'axe A et une direction radiale est une direction perpendiculaire à cet axe et passant par lui. Par ailleurs, la direction circonférentielle (ou latérale) correspond à une direction perpendiculaire à l'axe A et ne passant pas par lui. Sauf précision contraire, interne et externe, respectivement, sont utilisés en référence à une direction radiale de sorte que la partie ou la face interne d'un élément est plus proche de l'axe A que la partie ou la face externe du même élément. De plus, un élément est considéré « dans un repère fixe » lorsque celui-ci est maintenu immobile en rotation par rapport à l'axe A, tandis qu'il est considéré « dans un repère tournant » lorsqu'il est susceptible d'être entrainé en rotation par rapport à l'axe A.

Le réducteur 50 est de type planétaire et comprend :
- un pignon solaire 51, centré sur un axe de rotation du réducteur et configuré pour être entrainé en rotation par un arbre d'entrée d'entrainement de la turbomachine,
- une couronne 52, coaxiale avec le pignon solaire 51 et configurée pour entrainer en rotation l'arbre d'entrainement de l'hélice autour de l'axe de rotation, et
- une série de satellites 53 répartis circonférentiellement autour de l'axe de rotation du réducteur entre le pignon solaire 51 et la couronne 52, chaque satellite étant engrené intérieurement avec le pignon solaire 51 et extérieurement avec la couronne 52. La série de satellites 53 est montée sur un porte-satellites 54 qui est fixe par rapport à une partie stator de la turbomachine.

En variante, le réducteur 50 peut être épicycloïdal, auquel cas la couronne 52 est montée fixement sur une partie stator de la turbomachine et l'arbre d'entrainement est entrainé en rotation par le porte-satellites 54.

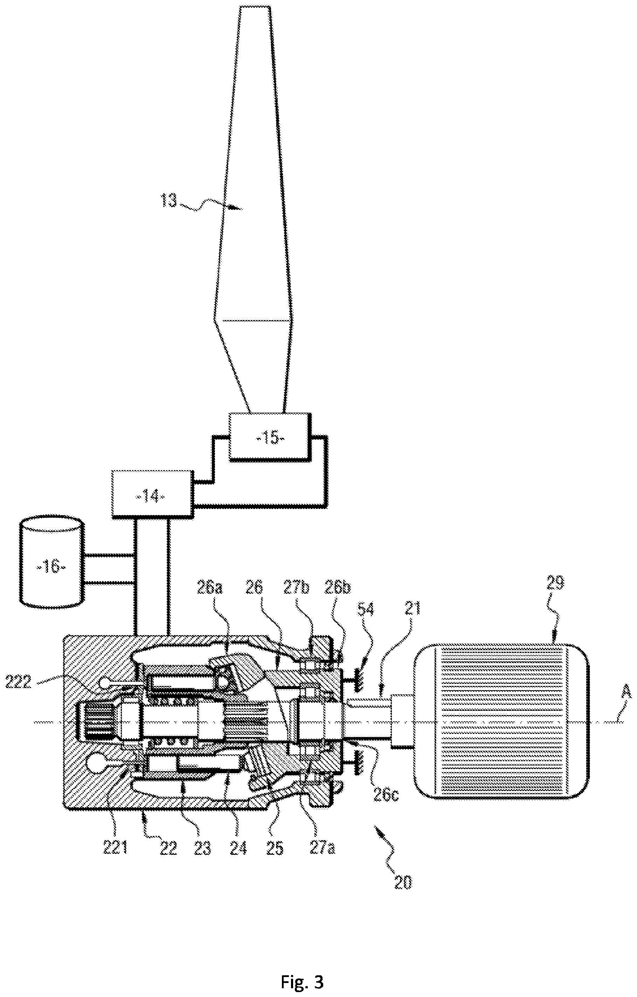

Dans un mode de réalisation illustré sur la **figure 3****,** le mécanisme de changement de pas comprend un actionneur électrohydraulique 11 (EHA, acronyme anglais de « Electro Hydraulic Actuator »), configuré pour actionner un vérin 15 qui est raccordé mécaniquement à l'hélice 13 afin d'en modifier le pas, une pompe hydraulique 20 configurée pour mettre sous pression un fluide (typiquement de l'huile) et une machine électrique 29.

La machine électrique 29 est montée fixe sur la partie stator de la turbomachine et comprend un arbre d'actionnement 21 mobile en rotation autour d'un axe de rotation A.

Le vérin 15 comprend un vérin double effet comprenant une première chambre 151 et une deuxième chambre 152 alimentées successivement par la pompe hydraulique 20. L'actionnement de la pompe hydraulique 20 par la machine électrique 29 a donc pour effet de remplir (respectivement vider) la première chambre 151 et de vider (respectivement remplir) la deuxième chambre 152. Le vérin 15 est par ailleurs solidaire en rotation de l'hélice 13 et raccordé à celle-ci de sorte que l'actionnement du vérin 15 (par remplissage et vidage successifs des première et deuxième chambres) a pour effet de modifier le pas de l'hélice 13.

La pompe hydraulique 20 peut typiquement être une pompe à cylindre axiaux à cylindrée fixe adapté pour alimenter le vérin 15 en fluide hydraulique sous pression lorsqu'elle est actionnée par la machine électrique 29 par l'intermédiaire de l'arbre d'actionnement.

La pompe peut comprendre un corps 22 entrainé en rotation par l'hélice 13, un barillet 23 logeant un ensemble de pistons 24 répartis circonférentiellement autour de l'axe de rotation A, chaque piston 24 comprenant un patin de glissement, et un plateau 26 incliné par rapport à l'axe de rotation A, chaque patin de glissement 25 prenant appui sur le plateau 26. Afin de permettre le fonctionnement de ce type de pompe, l'un parmi le plateau incliné et le barillet 23 peut être raccordé fixement à la partie stator de la turbomachine afin d'empêcher sa rotation autour de l'axe de rotation A et l'autre parmi le plateau incliné 26 et le barillet 23 peut être solidaire en rotation de l'arbre d'actionnement 21.

Lorsque la pompe hydraulique utilisée n'est pas une pompe réversible, l'actionneur hydraulique 11 peut en outre comprendre une vanne hydraulique d'inversion de débit 14, positionnée dans le circuit hydraulique afin de sélectionner la chambre du vérin 15 devant être alimentée en fluide hydraulique sous pression. La vanne hydraulique d'inversion de débit 14 est en particulier configurée pour raccorder sélectivement l'une ou l'autre des chambres du vérin 15 à une sortie de fluide sous pression 223 de la pompe hydraulique et à un retour de fluide basse pression 224, selon les besoins d'actionnement du vérin 15 pour obtenir le calage de pas désiré pour l'hélice.

La vanne hydraulique d'inversion de débit 14 est commandée par un contrôleur du mécanisme de changement de pas afin de mettre en communication fluidique de la sortie de fluide sous pression 223 avec la première ou la deuxième chambre 152 du vérin 15, selon le sens dans lequel le calage de l'hélice doit être modifié. Lorsque le calage de l'hélice doit être modifié, le contrôleur commande la machine électrique afin de mettre en rotation l'arbre d'actionnement 21 et d'entrainer en rotation la pompe hydraulique 20.

Ce fluide hydraulique sous pression est ensuite amené de la pompe hydraulique 20 vers la vanne hydraulique d'inversion de débit 14, qui selon sa position (définie par le contrôleur et la commande de calage de l'hélice) enverra ce fluide hydraulique sous pression vers l'une ou l'autre des chambres du vérin 15. La modification du pas provoquée par l'entrainement en rotation de l'arbre d'actionnement 21 peut alors être mesurée afin de déterminer une commande de couple pour la machine électrique 29 permettant d'atteindre le pas désiré.

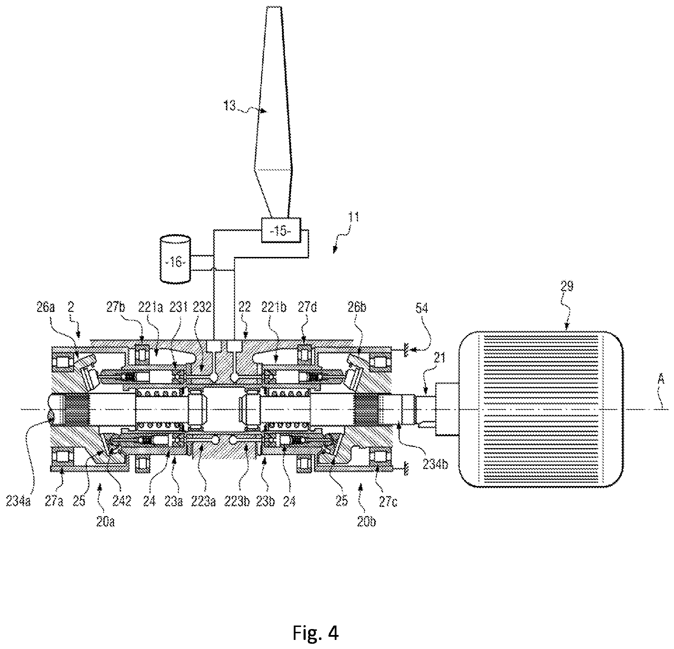

Dans un mode de réalisation alternatif illustré sur la figure 4, la pompe hydraulique 20 peut être une pompe hydraulique réversible dont le fonctionnement est contrôlé par le sens de rotation de l'arbre d'actionnement 21. Une telle pompe réversible peut par exemple être obtenue à partir d'un ensemble de pompage 2 comprenant deux pompes hydrauliques 20a, 20b à pistons axiaux adaptées pour mettre sous pression un fluide hydraulique partageant un même corps 22 entrainé en rotation par l'hélice 13. Chacune des pompes comprenant un barillet 23a, 23b logé dans une cavité 221a, 221b remplie en tout ou partie par du fluide hydraulique, le barillet 23a, 23b étant raccordé fixement à la partie stator de la turbomachine afin d'empêcher sa rotation autour de l'arbre d'actionnement 21. Chacune des pompes comprenant en outre un ensemble de cylindres formés dans le barillet 23a, 23b chaque cylindre logeant un piston 24 mobile en translation dans le cylindre et comprenant un orifice d'admission 242 configuré pour recevoir du fluide hydraulique en provenance de la cavité 221a, 221b, et un orifice de refoulement 232 configuré pour envoyer du fluide hydraulique vers un vérin 15 d'actionnement de l'hélice, ainsi qu'un plateau 26a, 26b incliné par rapport à l'axe de rotation A et solidaire en rotation de l'arbre d'actionnement 21, chaque piston 24 prenant appui sur une surface du plateau 26a, 26b. Le plateau d'une première des pompe 20a pouvant comprendre une lunule d'admission 261a s'étendant circonférentiellement par rapport à l'axe de rotation A et configurée pour permettre une circulation du fluide hydraulique depuis la cavité 221a vers les cylindres de la première des pompe 20a lorsque le plateau 26a, 26b de ladite pompe 20a est entrainé dans un premier sens de rotation. Le plateau de la deuxième des pompes 20b pouvant comprendre une lunule d'admission 261b s'étendant circonférentiellement par rapport à l'axe de rotation A configurée pour permettre une circulation du fluide hydraulique depuis la cavité 221b vers les cylindres de la deuxième des pompes 20b lorsque le plateau 26b de ladite pompe 20b est entrainé dans un deuxième sens de rotation opposé au premier sens de rotation.

L'actionneur électrohydraulique 11 comprend en outre un réservoir de fluide hydraulique 16 solidaire en rotation de l'hélice 13. Le réservoir a pour fonction de garantir une pression minimale au niveau de l'alimentation de la pompe au travers d'un clapet d'anti-retour et a également comme fonction d'éviter tout risque de surpression au niveau du refoulement au travers d'un clapet de surpression en cas d'échauffement.

De manière conventionnelle, le mécanisme de changement de pas peut en outre comprendre un système de mise en drapeau fonctionnel en cas d'absence de pression de fluide hydraulique. Dans une forme de réalisation, le système de mise en drapeau comprend des contrepoids du type masselotte.

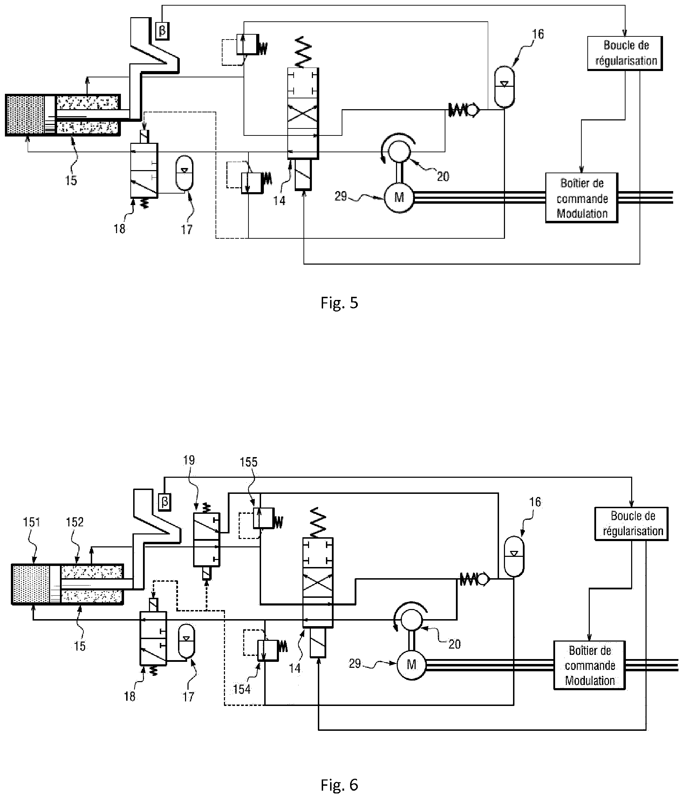

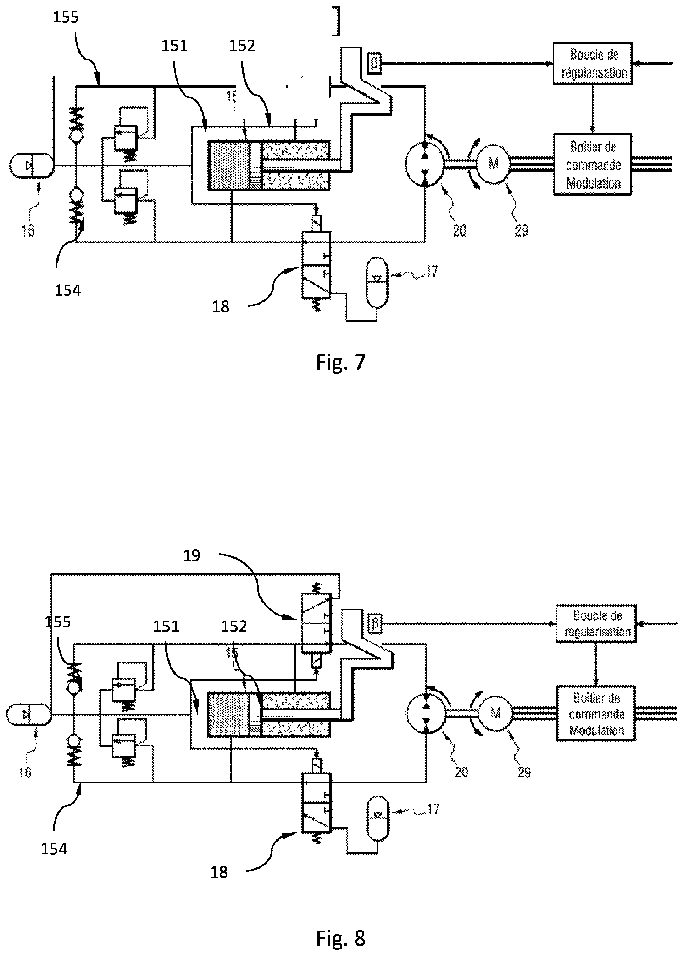

En plus ou à la place des contrepoids, le mécanisme de changement de pas comprend un réservoir de fluide hydraulique 17, ou accumulateur haute pression, configuré pour stocker un fluide hydraulique sous pression, et une vanne 18 dite de sécurité pilotée entre une première position configurée pour mettre en communication fluidique la première chambre 151 du vérin 15 avec la pompe hydraulique 20 et une deuxième position configurée pour mettre en communication fluidique la première chambre 151 du vérin 15 avec l'accumulateur haute pression 17 (voir **figure 5** pour le cas d'une pompe non réversible ou **figure 7** pour le cas d'une pompe réversible). L'accumulateur haute pression 17 peut-être alimenté en fluide sous pression directement par la pompe hydraulique par un circuit dédié (non représenté sur les figures).

La vanne 18 de sécurité permet ainsi, lorsqu'elle est dans sa deuxième position de décharger du fluide hydraulique sous pression contenu dans l'accumulateur haute pression 17 vers la première chambre 151 du vérin 15 et de réaliser ainsi la mise en drapeau de l'hélice 13. La pression dans l'accumulateur haute pression 17 est choisie de sorte à remplir rapidement la première chambre 151 du vérin 15 afin de permettre la mise en drapeau de l'hélice.

Le mécanisme de changement de pas peut comprendre un réservoir de fluide hydraulique supplémentaire 16, ou accumulateur basse pression, adapté pour stocker du fluide hydraulique sous pression et configuré pour maintenir un volume constant de fluide hydraulique dans le circuit hydraulique du mécanisme de changement de pas. La pression du fluide hydraulique dans l'accumulateur basse pression 16 est inférieure à la pression du fluide hydraulique dans l'accumulateur haute pression 17.

La vanne 18 de sécurité est pilotée par la pression du fluide hydraulique dans le circuit hydraulique du mécanisme de changement de pas. A cet effet, la vanne 18 de sécurité peut être montée d'un côté sur un ressort (ou équivalent) présentant une raideur prédéterminée et être reliée, d'un autre côté, à un point du circuit hydraulique, par exemple au niveau de l'accumulateur basse pression 16. De la sorte, la vanne 18 de sécurité passe de la première position à la deuxième position lorsque la pression dans le circuit hydraulique au niveau de l'accumulateur basse pression 16 est inférieure à un seuil prédéterminé (qui est défini par la raideur du ressort). Ce pilotage permet ainsi de réaliser une mise en drapeau de l'hélice dès l'apparition d'une fuite de fluide hydraulique dans le circuit hydraulique du mécanisme de changement de pas. En effet, en cas de fuite de fluide hydraulique, la pression dans le circuit hydraulique diminue progressivement jusqu'à atteindre le seuil prédéterminé : la pression n'est alors plus suffisante pour contrer l'effort appliqué par le ressort sur la vanne 18 de sécurité, qui se déplace donc automatiquement vers sa deuxième position.

L'accumulateur basse pression 16 et l'accumulateur haute pression 17 peuvent être montés dans un repère tournant de la turbomachine, et peuvent notamment être entrainés en rotation par l'hélice 10. Une telle configuration permet ainsi de s'affranchir de la nécessité de transférer l'huile depuis un élément dans le repère fixe (stator) vers le vérin 15 qui est dans le repère tournant (entrainé en rotation par l'hélice).

Le mécanisme de changement de pas comprend en outre des moyens configurés pour permettre une décharge de la deuxième chambre 152 dans l'accumulateur basse pression 16 lorsque la vanne 18 de sécurité vient dans la deuxième position, c'est-à-dire en cas de mise en drapeau.

A cet effet, dans une première forme de réalisation (voir **figure 5** pour le cas d'une pompe non réversible ou **figure 7** pour le cas d'une pompe réversible), le mécanisme de changement de pas peut comprendre un premier clapet de surpression 154 configuré pour mettre en communication fluidique la première chambre 151 du vérin 15 avec l'accumulateur basse pression 16 lorsque la pression de la deuxième chambre 152 du vérin 15 est supérieure à un seuil prédéterminé.

Dans une deuxième forme de réalisation illustré par la **figure 6** pour le cas d'une pompe non réversible ou par la **figure 8** pour le cas d'une pompe réversible, qui peut être cumulée avec la première, le mécanisme de changement de pas comprend en outre une vanne supplémentaire 19 dite de décharge mobile entre une première position, dans laquelle la vanne 19 de décharge met en communication fluidique la deuxième chambre 152 du vérin 15 avec la pompe hydraulique 20, et une deuxième position, dans laquelle la vanne 19 de décharge met en communication fluidique la deuxième chambre 152 du vérin 15 avec l'accumulateur basse pression 16. La première position de la vanne 19 de décharge correspond donc à une position de fonctionnement normal, puisqu'elle permet le retour du fluide hydraulique vers la pompe hydraulique.

La vanne 19 de décharge est également pilotée par la pression dans le circuit hydraulique, par exemple prise au niveau de l'accumulateur basse pression 16. De la sorte, la vanne 18 de sécurité et la vanne 19 de décharge passent toutes deux automatiquement de la première position vers la deuxième position dès lors que la pression dans le circuit hydraulique devient inférieure au seuil prédéterminé.

Le mécanisme peut comprendre en outre un deuxième clapet de surpression 155 configuré pour mettre en communication fluidique la deuxième chambre 152 du vérin 15 avec l'accumulateur basse pression 16 lorsque la pression dans la deuxième chambre 152 du vérin 15 est supérieure à un seuil de surpression prédéterminé. Le deuxième clapet permet ainsi la décharge de la deuxième chambre 152 du vérin 15 en cas de surpression.

Le fonctionnement du système hydraulique de mise en drapeau s'effectue comme suit, dans le cas d'un mécanisme de changement de pas comprenant à la fois la vanne 19 de décharge et le premier clapet de surpression 154. Ceci n'est cependant pas limitatif, le mécanisme de changement de pas pouvant ne comprendre que le premier clapet de suppression 154.

En fonctionnement normal (c'est-à-dire sans fuite), la vanne 18 de sécurité et la vanne 19 de décharge sont placées dans leur première position, permettant ainsi l'alimentation sélectivement de la première chambre 151 ou de la deuxième chambre 152 du vérin 15 par la vanne d'inversion de débit 14, ou directement par la pompe hydraulique lorsqu'une pompe réversible est utilisée.

En cas de fuite, la pression dans le circuit hydraulique du mécanisme de changement de pas a pour effet de diminuer la pression au niveau de l'accumulateur basse pression 16. La pression en entrée de la vanne 18 de sécurité et de la vanne 19 de décharge n'est alors plus suffisante pour résister à la force appliquée par leur ressort, ce qui a pour effet de déplacer la vanne 18 de sécurité et la vanne 19 de décharge de leur première position vers leur deuxième position. Dans cette configuration, la première chambre 151 du vérin 15 est alors mise en communication fluidique avec l'accumulateur haute pression 17. La première chambre 151 du vérin 15 se remplit donc rapidement avec du fluide hydraulique sous pression déchargé par l'accumulateur haute pression 17. Simultanément, la deuxième chambre 152 du vérin 15 est mise en communication fluidique avec l'accumulateur basse pression 16. Le remplissage de la première chambre 151 du vérin 15 ayant pour effet d'augmenter la pression dans la deuxième chambre 152 du vérin 15, celle-ci se décharge donc progressivement dans l'accumulateur basse pression 16 via la vanne 19 de décharge.

Le remplissage de la première chambre 151 du vérin a par ailleurs pour effet de déplacer le piston du vérin 15 et donc de modifier le calage de l'hélice.

On notera que, lorsque le mécanisme de changement de pas ne comprend que le premier clapet de surpression 154, celui-ci devient passant dès lors que la deuxième chambre 152 du vérin 15 se décharge dans l'accumulateur basse pression 16.

Lorsque la pompe hydraulique utilisée dans le mécanisme de changement de pas n'est pas réversible, le mécanisme de changement de pas peut en outre comprendre une vanne d'inversion de débit 14 configurée pour mettre sélectivement en communication fluidique la pompe hydraulique 20 avec la première chambre 151 ou la deuxième chambre 152 du vérin 15, de manière à permettre la modification du pas de l'hélice (voir par exemple sur la **figure 8**).

Cependant lorsque qu'une pompe hydraulique réversible est utilisée il n'est pas nécessaire d'utiliser une telle vanne d'inversion de débit, chacune des chambres du vérin pouvant être relié à une des sorties de la pompe hydraulique.

Cette configuration du mécanisme de changement de pas permet ainsi de s'affranchir de l'utilisation d'un transfert d'huile tournant (OTB), supprimant ainsi les risques de fuite et les pompes de récupération d'huile associée ainsi que le surdimensionnement associé du réservoir d'huile. Le circuit est en outre indépendant du groupe de lubrification. En particulier, la pression délivrée par la pompe hydraulique 20 peut atteindre des niveaux importants (de l'ordre de 300 bars), ce qui facilite le dimensionnement du vérin 15.

On notera ici que la mise en drapeau ne comporte que des moyens d'actionnement passifs, la vanne 18 de sécurité et la vanne 19 de décharge étant pilotées uniquement par la pression dans le circuit hydraulique du mécanisme de changement de pas. Aucun contrôleur ni système électrique n'est donc nécessaire, en dehors des moyens électriques nécessaires au contrôle de la vanne d'inversion de débit et du moteur électrique 29.

## Revendications

1. Mécanisme de changement de pas d'une hélice (10) de turbomachine, ladite turbomachine comprenant une partie stator et une partie rotor, ledit mécanisme de changement de pas comprenant un actionneur électrohydraulique (11) comprenant :
- un vérin d'actionnement (15) de l'hélice, comprenant une première chambre (151) et une deuxième chambre (152);
- une pompe hydraulique (20) adaptée pour alimenter sélectivement la première chambre (151) ou la deuxième chambre (152) du vérin (15) en fluide hydraulique sous pression ;
- un réservoir de fluide hydraulique (17) configuré pour stocker un fluide hydraulique sous pression ;
- une vanne (18) pilotée entre une première position, dans laquelle la vanne (18) met en communication fluidique la première chambre (151) du vérin (15) avec la pompe hydraulique (20), et une deuxième position dans laquelle la vanne (18) met en communication fluidique la première chambre (151) du vérin (15) avec le réservoir de fluide hydraulique (17),
le mécanisme de changement de pas étant **caractérisé en ce qu'**il comprend en outre un réservoir de fluide hydraulique supplémentaire (16), une pression du réservoir de fluide hydraulique (17) étant supérieure à une pression du réservoir de fluide hydraulique supplémentaire (16), et **en ce que** la vanne (18) est pilotée par la pression dudit réservoir de fluide hydraulique supplémentaire (16) et passe de la première position à la deuxième position lorsque la pression du réservoir de fluide hydraulique supplémentaire (16) est inférieure à un seuil prédéterminé.

2. Mécanisme selon la revendication 1, dans lequel le réservoir de fluide hydraulique supplémentaire (16) est configuré pour être monté dans un repère tournant de la turbomachine.

3. Mécanisme selon l'une des revendications 1 et 2, comprenant en outre un clapet de surpression (155) et/ou une vanne supplémentaire (19) configurés pour mettre en communication fluidique la deuxième chambre (152) du vérin (15) avec le réservoir hydraulique supplémentaire (16) lorsque la vanne supplémentaire (19) est dans la deuxième position.

4. Mécanisme selon la revendication 3, dans laquelle le capet de surpression (155) et/ou la vanne supplémentaire (19) sont pilotés par la pression du réservoir de fluide supplémentaire (16).

5. Mécanisme selon l'une des revendication 1 à 4, comprenant en outre un clapet de surpression supplémentaire (154) configuré pour mettre en communication fluidique la première chambre (151) du vérin avec le réservoir de fluide hydraulique supplémentaire (16) lorsque la pression de la première chambre (151) du vérin est supérieure à un seuil prédéterminé.

6. Mécanisme selon l'une des revendications 1 à 5, dans lequel le réservoir de fluide hydraulique (17) est configuré pour être monté dans un repère tournant de la turbomachine.

7. Mécanisme de changement de pas selon l'une des revendications 1 à 6, dans lequel le corps (22) de la pompe est configuré pour être dans un repère tournant de la turbomachine et l'un parmi le plateau incliné et le barillet (23) de la pompe est configuré pour être dans un repère fixe de la turbomachine.

8. Mécanisme de changement de pas selon la revendication 7, dans lequel en l'absence de rotation entre le repère fixe et le repère tournant, la pompe à un débit nul.

9. Mécanisme de changement de pas selon l'une des revendications 1 à 8, comprenant en outre une vanne d'inversion de débit configurée pour mettre sélectivement en communication fluidique la pompe hydraulique (20) avec la première chambre (151) ou la deuxième (152) chambre du vérin (15).

10. Mécanisme de changement de pas selon l'une des revendication 1 à 9, dans lequel la pompe hydraulique (20) est réversible.

11. Turbomachine comprenant une hélice (13) et un mécanisme de changement de pas selon l'une des revendications 1 à 10 configuré pour actionner un vérin (15) qui est raccordé mécaniquement à l'hélice (13).

12. Aéronef comprenant au moins une turbomachine selon la revendication 11 raccordée sur l'aéronef par l'intermédiaire d'un pylône.

## Patentansprüche

1. Mechanismus zum Ändern der Blattanstellung einer Luftschraube (10) einer Turbomaschine, wobei die Turbomaschine einen Statorteil und einen Rotorteil umfasst, wobei der Mechanismus zum Ändern der Blattanstellung einen elektrohydraulischen Aktuator (11) umfasst, der umfasst:
- einen Betätigungszylinder (15) der Luftschraube, der eine erste Kammer (151) und eine zweite Kammer (152) umfasst;
- eine Hydraulikpumpe (20), die geeignet ist, die erste Kammer (151) oder die zweite Kammer (152) des Zylinders (15) selektiv mit unter Druck stehendem Hydraulikfluid zu versorgen;
- einen Hydraulikfluidbehälter (17), der zum Speichern eines Hydraulikfluids unter Druck ausgelegt ist;
- ein Ventil (18), das zwischen einer ersten Position, in der das Ventil (18) die erste Kammer (151) des Zylinders (15) mit der Hydraulikpumpe (20) in Fluidverbindung bringt, und einer zweiten Position, in der das Ventil (18) die erste Kammer (151) des Zylinders (15) mit dem Hydraulikfluidbehälter (17) in Fluidverbindung bringt, gesteuert wird,
wobei der Mechanismus zum Ändern der Blattanstellung **dadurch gekennzeichnet ist, dass** er ferner einen zusätzlichen Hydraulikfluidbehälter (16) umfasst, wobei ein Druck des Hydraulikfluidbehälters (17) größer ist als ein Druck des zusätzlichen Hydraulikfluidbehälters (16), und dass das Ventil (18) durch den Druck des zusätzlichen Hydraulikfluidbehälters (16) gesteuert wird und aus der ersten Position in die zweite Position wechselt, wenn der Druck des zusätzlichen Hydraulikfluidbehälters (16) unter einem vorgegebenen Schwellenwert liegt.

2. Mechanismus nach Anspruch 1, wobei der zusätzliche Hydraulikfluidbehälter (16) ausgelegt ist, um in einer Rotationsmarkierung der Turbomaschine angebracht zu sein.

3. Mechanismus nach einem der Ansprüche 1 und 2, der zusätzlich ein Überdruckventil (155) und/oder ein zusätzliches Ventil (19) umfasst, die ausgelegt sind, um die zweite Kammer (152) des Zylinders (15) mit dem zusätzlichen Hydraulikbehälter (16) in Fluidverbindung zu bringen, wenn sich das zusätzliche Ventil (19) in der zweiten Position befindet.

4. Mechanismus nach Anspruch 3, wobei das Überdruckventil (155) und/oder das zusätzliche Ventil (19) durch den Druck des zusätzlichen Fluidbehälters (16) gesteuert werden.

5. Mechanismus nach einem der Ansprüche 1 bis 4, der ferner ein zusätzliches Überdruckventil (154) umfasst, das ausgelegt ist, um die erste Kammer (151) des Zylinders mit dem zusätzlichen Hydraulikfluidbehälter (16) in Fluidverbindung zu bringen, wenn der Druck in der ersten Kammer (151) des Zylinders über einem vorbestimmten Schwellenwert liegt.

6. Mechanismus nach einem der Ansprüche 1 bis 5, wobei der Hydraulikfluidbehälter (17) ausgelegt ist, um in einer Rotationsmarkierung der Turbomaschine angebracht zu sein.

7. Mechanismus zum Ändern der Blattanstellung nach einem der Ansprüche 1 bis 6, wobei der Körper (22) der Pumpe ausgelegt ist, um in einer Rotationsmarkierung der Turbomaschine zu sein und entweder die geneigte Platte oder der Zylinderstern (23) der Pumpe ausgelegt ist, um in einer festen Markierung der Turbomaschine zu sein.

8. Mechanismus zum Ändern der Blattanstellung nach Anspruch 7, wobei die Pumpe bei keiner Rotation zwischen der festen und der Rotationsmarkierung einen Durchfluss von Null hat.

9. Mechanismus zum Ändern der Blattanstellung nach einem der Ansprüche 1 bis 8, der ferner ein Durchflussumkehrventil umfasst, das ausgelegt ist, um die Hydraulikpumpe (20) selektiv mit der ersten Kammer (151) oder der zweiten Kammer (152) des Zylinders (15) in Fluidverbindung zu bringen.

10. Mechanismus zum Ändern der Blattanstellung nach einem der Ansprüche 1 bis 9, wobei die Hydraulikpumpe (20) umkehrbar ist.

11. Turbomaschine, umfassend eine Luftschraube (13) und einen Mechanismus zum Ändern der Blattanstellung nach einem der Ansprüche 1 bis 10, der ausgelegt ist, um einen Zylinder (15) zu betätigen, der mechanisch mit der Luftschraube (13) verbunden ist.

12. Flugzeug, umfassend mindestens eine Turbomaschine nach Anspruch 11, die über einen Pylon mit dem Flugzeug verbunden ist.

## Claims

1. A mechanism for changing the pitch of a turbine engine propeller (10), said turbine engine comprising a stator portion and a rotor portion, said pitch change mechanism comprising an electrohydraulic actuator (11) comprising:
- a jack for actuating (15) the propeller, comprising a first chamber (151) and a second chamber (152);
- a hydraulic pump (20) adapted to selectively supply the first chamber (151) or the second chamber (152) of the jack (15) with pressurized hydraulic fluid;
- a hydraulic fluid tank (17) configured to store a pressurized hydraulic fluid;
- a valve (18) controlled between a first position, in which the valve (18) puts the first chamber (151) of the jack (15) in fluid communication with the hydraulic pump (20), and a second position in which the valve (18) puts the first chamber (151) of the jack (15) in fluid communication with the hydraulic fluid tank (17),
the pitch change mechanism being **characterized in that** it further comprises an additional hydraulic fluid tank (16), a pressure of the hydraulic fluid tank (17) being greater than a pressure of the additional hydraulic fluid tank (16), and **in that** the valve (18) is controlled by the pressure from said additional hydraulic fluid tank (16) and moves from the first position to the second position when the pressure of the additional hydraulic fluid tank (16) is below a predetermined threshold.

2. The pitch change mechanism according to claim 1, wherein the additional hydraulic fluid tank (16) is configured to be mounted in a rotating reference frame of the turbine engine.

3. The pitch change mechanism according to any of claims 1 and 2, further comprising a pressure relief valve (155) and/or an additional valve (19) configured to put the second chamber (152) of the jack (15) in fluid communication with the additional hydraulic tank (16) when the additional valve (19) is in the second position.

4. The pitch change mechanism according to claim 3, wherein the pressure relief valve (155) and/or the additional valve (19) are controlled by the pressure of the additional fluid tank (16).

5. The pitch change mechanism according to any of claims 1 to 4, further comprising an additional pressure relief valve (154) configured to put the first chamber (151) of the jack in fluid communication with the additional hydraulic fluid tank (16) when the pressure of the first chamber (151) of the jack is above a predetermined threshold.

6. The pitch change mechanism according to any of claims 1 to 5, wherein the hydraulic fluid tank (17) is configured to be mounted in a rotating reference frame of the turbine engine.

7. The pitch change mechanism according to any of claims 1 to 6, wherein the body (22) of the pump is configured to be in a rotating reference frame of the turbine engine and one among the inclined plate and the barrel (23) of the pump is configured to be in a fixed reference frame of the turbine engine.

8. The pitch change mechanism according to claim 7, wherein in the absence of rotation between the fixed reference frame and the rotating reference frame, the flow rate of the pump is null.

9. The pitch change mechanism according to any of claims 1 to 8, further comprising a flow rate reversal valve configured to selectively put the hydraulic pump (20) in fluid communication with the first chamber (151) or the second chamber (152) of the jack (15).

10. The pitch change mechanism according to any of claims 1 to 9, wherein the hydraulic pump (20) is reversible.

11. A turbine engine comprising a propeller (13) and a pitch change mechanism according to any of claims 1 to 10 configured to actuate a cylinder (15) which is mechanically connected to the propeller (13).

12. An aircraft comprising at least one turbine engine according to claim 11 connected on the aircraft via a pylon.
